**Europäisches Patentamt**

**European Patent Office**

**Office européen des brevets**

(11) Veröffentlichungsnummer: **0 204 969**
**B1**

(12) **EUROPÄISCHE PATENTSCHRIFT**

(45) Veröffentlichungstag der Patentschrift:
**05.04.89**

(51) Int. Cl.⁴: **F16L 37/02**, F16L 47/00

(21) Anmeldenummer: **86106312.1**

(22) Anmeldetag: **09.05.86**

(54) **Rohrverbindung.**

(30) Priorität: **06.06.85   CH 2395/85**

(43) Veröffentlichungstag der Anmeldung:
**17.12.86 Patentblatt 86/51**

(45) Bekanntmachung des Hinweises auf die Patenterteilung:
**05.04.89 Patentblatt 89/14**

(84) Benannte Vertragsstaaten:
**AT BE DE FR GB NL SE**

(56) Entgegenhaltungen:
**CH-A- 376 326**
**DE-A- 2 844 653**
**GB-A- 1 059 714**
**US-A- 3 524 661**
**US-A- 3 656 783**

(73) Patentinhaber: **GEORG FISCHER
AKTIENGESELLSCHAFT, Mühlentalstrasse 105,
CH-8201 Schaffhausen(CH)**

(72) Erfinder: **Thalmann, Alfred, Brunngasse 71,
CH-8448 Uhwiesen(CH)**

**Beschreibung**

Die Erfindung betrifft eine Rohrverbindung für eine zugfeste, mediumsdichte Verbindung eines Kunststoffrohres mit einem metallischen Anschlussteil, wie sie im Oberbegriff von Anspruch 1 gekennzeichnet ist.

Zugfeste Rohrverbindungen zwischen Kunststoffrohren und metallischen Anschlussteilen oder Rohren sind bekannt (DE-C 2 911 708, DE-U 7 931 114, GB-A 1 059 714, US-A 3 524 661 und US-A 3 656 783).

Bei diesen Rohrverbindungen wird die zugfeste Verbindung durch starkes Verformen des Kunststoffrohres erreicht, wobei dies entweder durch Aufweiten einer inneren Stützhülse und Eindrücken des Kunststoffrohres in Ringnuten des metallischen Anschlussteiles erfolgt (DE-U 7 931 114, GB-A 1 059 714) oder umgekehrt durch Aufschieben einer äusseren Hülse auf das Kunststoffrohr, wobei dieses in Ringnuten eines eingesteckten, metallischen Anschlussteiles erfolgt (DE-C 2 911 708). Die mediumsdichte Verbindung wird hierbei gleichzeitig mit der Verformung des Kunststoffrohres erreicht.

Es hat sich jedoch gezeigt, dass bei diesen Rohrverbindungen, insbesondere bei grösseren Dimensionen wie sie bei Gasleitungen verwendet werden, eine Dichtheit aufgrund des Kriechens von Kunststoff und dem Abbau von Spannungen auf lange Sicht nicht gewährleistet ist. Bei der Verformung des Kunststoffes, insbesondere bei der Aufweitung des Rohres mittels der inneren Hülse (DE-U 7 931 114), entstehen am Übergang zum nicht aufgeweiteten Rohrteil grössere Spannungsfelder, durch welche bei zusätzlicher Belastung durch Innendruck und Zug die Dauerfestigkeit und Dichtheit der Verbindung nicht gewährleistet ist. Eine direkte Verbindung eines Kunststoffrohres mit einem Metallrohr oder einem, an einer Armatur fest angeordneten Anschlussteil ist durch das erforderliche innere Ausweitwerkzeug schwer möglich. Verbindungen am Verwendungsort sind durch die erforderlichen Werkzeuge ebenfalls sehr schwierig herzustellen.

Aufgabe der vorliegenden Erfindung ist die Schaffung einer Rohrverbindung der eingangs genannten Art, welche auch bei grösseren Rohrdimensionen auf die Dauer mediumsdicht ist, wobei eine Verbindung des Kunststoffrohres mit metallischen Amaturen ohne zusätzliche lösbare Teile möglich sein soll.

Erfindungsgemäss wird dies durch die Merkmale gemäss Anspruch 1 gelöst.

Besonders vorteilhafte Ausgestaltungen der Erfindung sind in den davon abhängigen Ansprüchen gekennzeichnet.

Durch die erfindungsgemässen Merkmale wird der Rohrstutzen aus Kunststoff nur im Verbindungsbereich mit dem Muffenkörper mittels der Stützhülse aufgeweitet, wobei im Bereich der Dichtung die Stützhülse nur eine abstützende Wirkung hat.

Dadurch wird der Rohrstutzen im Bereich der Dichtung nicht deformiert, so dass eine einwandfreie Dichtwirkung gegeben ist wobei zusätzliche, nicht vom Mediumdruck herrührende Spannungen in diesem Bereich des Rohrstutzens nicht vorhanden sind. Auch im Bereich der Sitzpartie werden die zusätzlichen Spannungen gering gehalten, da die Verformung beim Einpressen des Rohrstutzens durch die nachträglich annähernd gleichgrosse Aufweitung mittels der Stützhülse wieder aufgehoben wird. Zusätzliche Spannungen entstehen lediglich im Bereich der sägezahnförmigen Ringvorsprünge.

Die CH-A 376 326 zeigt zwar zusätzlich zu der Halterung des Kunststoffrohres in dem sägezahnförmigen Muffenabschnitt eine Abdichtung mittels einer verspannbaren Muffendichtung.

Durch die Überwurfmutter wird die Dichtung gegen eine konische Stirnfläche der Muffe gezogen, wodurch die Dichtung radial gegen das Kunststoffrohr verspannt wird. Da keine Stützhülse vorhanden ist, kann damit auch das Kunststoffrohr radial nach innen deformiert werden, so dass die feste Verbindung im sägezahnförmigen Muffenteil z.T. wieder aufgehoben wird.

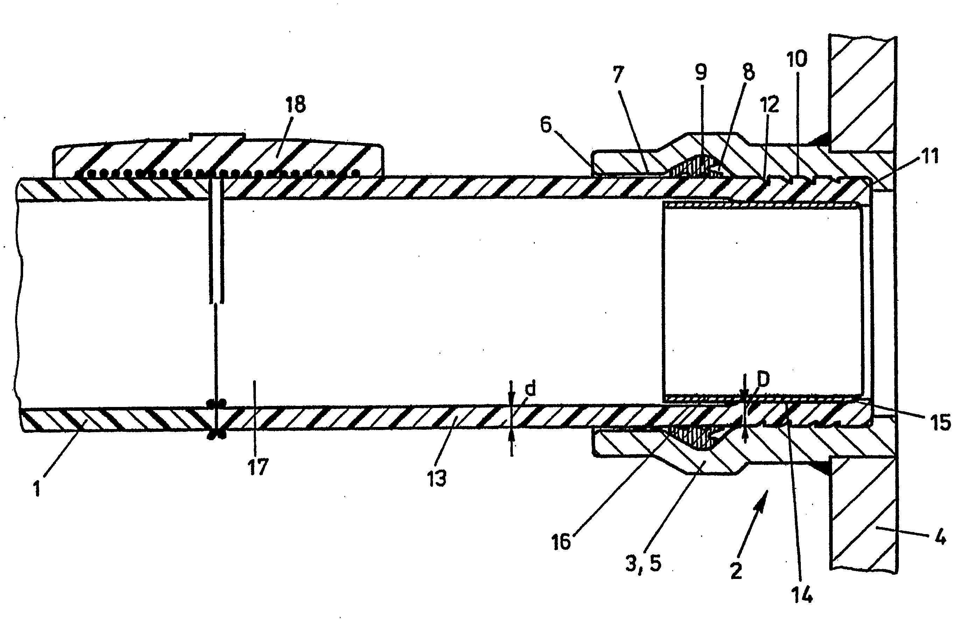

Die Rohrverbindung ist in der beiliegenden Zeichnung beispielsweise dargestellt und nachfolgend beschrieben.

Die einzige Figur zeigt einen Längsschnitt der erfindungsgemässen Rohrverbindung eines Kunststoffrohres 1 mit einem metallischen Anschlussteil 2, wobei ein Muffenkörper 3 in dem gezeigten Ausführungsbeispiel als eine an einem Ventil oder einer Armatur 4 angeschweisste Anschweissmuffe 5 ausgebildet ist. Der Muffenkörper 3 kann am Gegenende auch mit einem Anschlussgewinde versehen als Schraubmuffe oder mit einem metallischen Anschweissstutzen versehen zum direkten Rohrschweissen ausgebildet sein oder einen Flansch aufweisen, wodurch er mittels einer Flanschverbindung an einem Ventil, Fitting, Armatur oder Metallrohr zu befestigen ist.

Der Muffenkörper 3 weist von der Einsteckseite 6 beginnend eine zylindrische Führungspartie 7, eine Ringnute 8 für die Anordnung einer Dichtung 9 – vorzugsweise einer Lippendichtung – und eine Sitz-Partie 10 mit einer ringförmigen Stirnfläche 11 als Längsanschlag auf.

Die Sitz-Partie 10 weist an ihrem Innenumfang ringförmige Vorsprünge 12 auf, welche im Querschnitt sägezahnförmig ausgebildet sind.

In dem Muffenkörper 3 ist ein aus Kunststoff bestehender Rohrstutzen 13 angeordnet, welcher durch Einpressen und Eingraben der sägezahnförmigen Ringe 12 kraft- und formschlüssig im Bereich der Sitz-Partie 10 mit dem Muffenkörper 3 verbunden ist.

Der Rohrstutzen 13 weist am Einsteckende einen Zentriersitz 14 für eine gegenüber dem Rohrstutzen 13 steifere Stützhülse 16 auf. Im Bereich des Zentriersitzes 14 ist die Wandstärke D des Rohrstutzens etwas grösser als die übrige Wandstärke d, welche der des zu verbindenden Kunststoffrohres 1 entspricht.

Die Stützhülse 16 ist länger als der Zentriersitz 14 und reicht bis an den Bereich des äusseren Endes der Dichtung 9, wobei die Länge des Zentriersitzes 14 ungefähr der Länge der Sitz-Partie 10 des Muffenkörpers 3 entspricht. Der Aussendurchmesser des Rohrstutzens 13 ist grösser als der durch die Spitzen der sägezahnförmigen Ringe 12 bestimmte Innendurchmesser, aber gleich gross oder geringfügig kleiner als der Innendurchmesser der Sitz-Partie 10. Der Aussendurchmesser der Stützhülse 16 ist grösser als der Innendurchmesser des Zentriersitzes 14 des Rohrstutzens 13, aber kleiner als der restliche Innendurchmesser des Rohrstutzens.

Das freie Ende 17 des Rohrstutzens 13 ist mit dem Kunststoffrohr durch eine stoffschlüssige Verbindung wie z.B. durch eine Schweissverbindung mittels einer Schweissmuffe 18 (siehe Fig. oben), durch eine Stumpfschweissung (siehe Fig. unten) oder durch eine Klebeverbindung mediumsdicht, zugfest und unlösbar verbunden.

Die Montage erfolgt wie nachfolgend beschrieben.

Zuerst wird die Dichtung 9 in die Ringnute 8 eingelegt. Dann wird der Rohrstutzen 13 mittels eines Druckstempels in die Sitz-Partie 10 des Muffenkörpers 3 bis zum Endanschlag 11 eingepresst, wobei eine einengende Verformung des Rohrstutzens 13 durch die sägezahnförmigen Vorsprünge 12 erfolgt und diese teilweise in die Aussenfläche des Rohrstutzens 13 eindringen. Durch das Eindrücken der vorzugsweise aus einem rostfreien Stahl hergestellten Stützhülse 16 vom freien Ende 17 her bis zum einen Anschlag 15 oder bis zu einem Anschlag am Einpresswerkzeug wird der Rohrstutzen 13 im Bereich der Sitz-Partie 10 aufgeweitet, so dass die sägezahnförmigen Ringvorsprünge 12 von aussen weiter in die Rohrstutzenwand eindringen, womit ein Kraft- und Formschluss der Verbindung zwischen Rohrstutzen 13 und Muffenkörper 3 erreicht wird.

Diese Arbeitsgänge können vorteilhaft in einer Werkstatt ausgeführt werden, wo die entsprechenden Hilfsmittel wie z.B. eine Druckpresse zur Verfügung stehen. Am Verwendungsort erfolgt dann die endgültige Verbindung des Rohrstutzens mit der bereits verlegten Rohrleitung 1 mittels einer vorgängig beschriebenen Verbindung durch Schweissen oder Kleben je nach verwendetem Kunststoff-Material. Dadurch entsteht insgesamt eine nicht lösbare, zugfeste und auf die Dauer eine mediumsdichte Verbindung des Kunststoffrohres mit einem metallischen Anschlussteil.

Da in dem Bereich der kraft- und formschlüssigen Verbindung die Kraftwirkung des Mediumdruckes durch den in diesem Bereich tragenden metallischen Muffenkörper aufgenommen wird, erfolgt hier die Beanspruchung des Rohrstutzens nur durch entstehende Druck-Spannungen des Kraftschlusses und der durch den Innendruck und äussere Einflüsse entstehenden Zugkräfte. Ausserdem wird durch die etwas grössere Wanddicke in diesem Bereich die Festigkeit erhöht.

Die erfindungsgemässe Rohrverbindung wird vorzugsweise bei Gasrohrleitungen aus Polyäthylen verwendet. Sie kann aber auch bei Rohrleitungen aus Polypropylen eingesetzt werden.

**Patentansprüche**

1. Rohrverbindung für eine zugfeste und mediumsdichte Verbindung eines Kunststoffrohres (1) mit einem metallischen Anschlussstück (2), wobei in einem metallischen Muffenkörper (3) mit an der Innenkontur ringförmigen Vorsprüngen (12) ein rohrförmiges Teil (13) aus Kunststoff eingepresst ist, wobei am Innendurchmesser des eingepressten Teiles eine Stützhülse (16) angeordnet ist, welche im Aussendurchmesser grösser als der Innendurchmesser des rohrförmigen Teiles (13) im Verbindungsbereich ist, dadurch gekennzeichnet, dass das rohrförmige Teil ein Rohrstutzen (13) ist, welcher am freien Ende mit dem Kunststoffrohr direkt verbunden ist, dass die Vorsprünge (12) im Querschnitt sägezahnförmig ausgebildet sind, dass in einer am Einsteckende des Muffenkörpers (3) angeordneten Ringnute (8) eine Dichtung (9) eingelegt ist, dass die Wanddicke (D) des Rohrstutzens (13) am Einpressende auf die Länge des als Sitz-Partie (10) ausgebildeten Verbindungsbereiches grösser ist als die Wanddicke (d) der restlichen Länge, und dass die Stützhülse (16) länger als die Sitz-Partie (10) ist und bis in den Bereich des äusseren Endes der Dichtung (9) reicht.

2. Rohrverbindung nach Anspruch 1, dadurch gekennzeichnet, dass der Aussendurchmesser des Rohrstutzens (13) grösser als der durch die Spitzen der sägezahnförmigen Ringvorsprünge (12) bestimmte Innendurchmesser ist.

3. Rohrverbindung nach Anspruch 1 oder 2, dadurch gekennzeichnet, dass der Aussendurchmesser des Rohrstutzens (13) gleich gross oder geringfügig kleiner als der zwischen den sägezahnförmigen Ringvorsprüngen (12) angeordnete zylindrische Innendurchmesser ist.

4. Rohrverbindung nach einem der Ansprüche 1 bis 3, dadurch gekennzeichnet, dass die Stützhülse (16) als eine rostfreie Stahlhülse ausgebildet und auf eine Teillänge im Rohrstutzen (13) festsitzend angeordnet ist.

5. Rohrverbindung nach einem der Ansprüche 1 bis 4, dadurch gekennzeichnet, dass der Muffenkörper (3) am Gegenende als Anschweiss-Muffe (5) ausgebildet ist.

6. Rohrverbindung nach einem der Ansprüche 1 bis 4, dadurch gekennzeichnet, dass der Muffenkörper (3) am Gegenende als Anschweissstutzen ausgebildet ist.

7. Rohrverbindung nach einem der Ansprüche 1 bis 4, dadurch gekennzeichnet, dass der Muffenkörper (3) am Gegenende mit einem Anschlussgewinde versehen ist.

8. Rohrverbindung nach einem der Ansprüche 1 bis 4, dadurch gekennzeichnet, dass der Muffenkörper (3) am Gegenende mit einem Flansch versehen ist.

9. Rohrverbindung nach einem der Ansprüche 1 bis 8, dadurch gekennzeichnet, dass das freie Ende (17) des Rohrstutzens (13) mit der Kunststoffleitung (1) durch eine Muffen- oder Stumpfschweissverbindung mediumsdicht und unlösbar verbunden ist.

## Revendications

1. Raccord pour tuyau permettant une liaison résistante à la traction et étanche aux fluides d'un tuyau en matière plastique (1) à une pièce de raccordement métallique (2), une partie de forme tubulaire (13) en matière plastique étant enfoncée à force dans un corps de manchon (3) comportant des anneaux (12) faisant saillie sur le contour intérieur, une douille d'appui (16) étant disposée sur le diamètre intérieur de la partie enfoncée à force, et présentant un diamètre extérieur supérieur au diamètre intérieur de la partie de forme tubulaire (13) dans la zone de liaison, caractérisé en ce que la partie de forme tubulaire est une tubulure (13) directement reliée au tuyau de matière plastique à l'extrémité libre, en ce que les anneaux (12) comportent une section en forme de dents de scie faisant saillie, en ce qu'un joint d'étanchéité (9) est introduit dans une gorge annulaire (8) disposée à l'extrémité d'enfichage du corps de manchon (3), en ce que l'épaisseur de paroi (D) de la tubulure (13) à l'extrémité d'enfoncement à force, sur la longueur de la zone de liaison faisant fonction de siège (10) est supérieure à l'épaisseur de paroi (d) de la longueur restante, et en ce que la douille d'appui (16) est plus longue que la partie faisant fonction de siège (10) et arrive jusqu'à la zone de l'extrémité extérieure du joint d'étanchéité (9).

2. Raccord pour tuyau selon la revendication 1, caractérisé en ce que le diamètre extérieur de la tubulure (13) est plus grand que le diamètre intérieur déterminé par les sommets des saillies annulaires (12) en forme de dents de scie.

3. Raccord pour tuyau selon la revendication 1 ou 2, caractérisé en ce que le diamètre extérieur de la tubulure (13) est identique ou très légèrement inférieur au diamètre intérieur cylindrique qui se trouve entre les saillies annulaires (12) en forme de dents de scie.

4. Raccord pour tuyau selon l'une des revendications 1 à 3, caractérisé en ce que la douille d'appui (16) se présente sous la forme d'une douille en acier inoxydable et est fixée sur une partie de la longueur de la tubulure (13).

5. Raccord pour tuyau selon l'une des revendications 1 à 4, caractérisé en ce que le corps de manchon (3) est placé à l'extrémité opposée et présente la forme d'un manchon à souder (5).

6. Raccord pour tuyau selon l'une des revendications 1 à 4, caractérisé en ce que le corps de manchon (3) est placé à l'extrémité opposée et présente la forme d'une tubulure à souder.

7. Raccord pour tuyau selon l'une des revendications 1 à 4, caractérisé en ce que le corps de manchon (3) est placé à l'extrémité opposée et comporte un filetage de raccordement.

8. Raccord pour tuyau selon l'une des revendications 1 à 4, caractérisé en ce que le corps de manchon (3) est placé à l'extrémité opposée et comporte une bride.

9. Raccord pour tuyau selon l'une des revendications 1 à 8, caractérisé en ce que l'extrémité libre (17) de la tubulure (13) est reliée de manière étanche aux fluides et de façon inamovible à la conduite en matière plastique (1) par une liaison à manchon ou par une soudure bord à bord.

## Claims

1. Pipe coupling for a separation-resistant and fluid-tight coupling of a plastics pipe (1) to a metallic connection piece (2), in which a tube-shaped part (13) of plastics material is pressed into a metallic sleeve body (3) with annular projections (12) on its inner surface, in which a support sleeve (16) is positioned on the inner diameter of the pressed-in part, the outer diameter of the support sleeve being greater than the inner diameter of the tube-shaped part (13) in the coupling region, characterised in that the tube-shaped part is a pipe connector (13) which is coupled at its free end directly to the plastics tube, that the projections (12) are saw-tooth-shaped in cross-section, that a seal (9) is positioned in an annular groove (8) at the coupling end of the sleeve body (3), that the wall thickness (D) of the pipe connector (13) at the insertion end over the length of the connection region formed as the seat part (10) is greater than the wall thickness (d) of the remaining length, and that the support sleeve (16) is longer than the seat part (10) and extends up to the region of the outer end of the seal (9).

2. Pipe coupling according to claim 1, characterised in that the outer diameter of the pipe connector (13) is greater than the inner diameter determined by the peaks of the saw-tooth-shaped annular projections (12).

3. Pipe coupling according to claim 1 or 2, characterised in that the outer diameter of the pipe connector (13) is about the same size or slightly smaller than the cylindrical inner diameter between the saw-tooth-shaped annular projections (12).

4. Pipe coupling according to any of claims 1 to 3, characterised in that the support sleeve (16) is formed as a stainless steel sleeve and is fixedly positioned so as to extend over a part of the length in the pipe connector (13).

5. Pipe coupling according to any of claims 1 to 4, characterised in that the sleeve body (3) is formed at its opposite end as a welding sleeve (5).

6. Pipe coupling according to any of claims 1 to 4, characterised in that the sleeve body (3) is formed at its opposite end as a welding piece.

7. Pipe coupling according to any of claims 1 to 4, characterised in that the sleeve body (3) is provided at its opposite end with a connection thread.

8. Pipe coupling according to any of claims 1 to 4, characterised in that the sleeve body (3) is provided at its opposite end with a flange.

9. Pipe coupling according to any of claims 1 to 8, characterised in that the free end of the pipe connector (13) is coupled to the plastics tube (1) by a sleeve or butt weld connection in a fluid-tight and unreleasable manner.